# DEMANDE DE BREVET EUROPEEN

(11) **EP 0 762 356 A1**
(43) Date de publication de la demande: **12.03.1997**
(21) Numéro de dépôt: 96460027.4
(22) Date de dépôt: 02.08.1996
(51) Int. Cl.: G08B 13/24, B65D 25/36

(54) **Article ou emballage pourvu d'au moins un composant prévu pour pouvoir émettre une ou plusieurs informations**

(30) Priorité: 17.08.1995 FR 9509991
(71) Demandeur: EUROPLASTIQUES S.A., 53007 Laval Cédex (FR)
(72) Inventeur: Manach, Jacques, 53000 Laval (FR)
(74) Mandataire: Maillet, Alain

(57) **Abrégé**

La présente invention concerne un article ou un emballage qui sont au moins en partie constitués d'une matière plastique, et qui comportent chacun sur l'une au moins des faces de leur paroi en matière plastique une étiquette et au moins un composant prévu pour pouvoir émettre une ou plusieurs informations.

Ledit article ou ledit emballage (1, 10) est tel que ledit ou lesdits composants (4, 40) sont situés entre ladite étiquette (2, 20) et ladite face (3a, 30a) de ladite paroi (3, 30), ladite étiquette (2, 20) étant rendue intimement jointe à la partie en matière plastique dudit article ou dudit emballage (1, 10) par moulage sur ladite étiquette (2, 20) de la matière plastique destinée à constituer ladite partie de l'article ou de l'emballage (1, 10).

L'invention peut notamment s'appliquer à des produits vendus dans les grandes surfaces. Quant aux informations émises par le ou lesdits composants, elles peuvent par exemple servir à signaler le vol dudit article ou dudit emballage.

## Description

La présente invention concerne un article ou un emballage qui sont au moins en partie constitués d'une matière plastique, et qui comportent chacun sur l'une au moins des faces de leur paroi en matière plastique une étiquette et au moins un composant prévu pour pouvoir émettre une ou plusieurs informations. L'invention peut notamment s'appliquer à des produits vendus dans les grandes surfaces, tels que du matériel haute-fidélité, des bouteilles d'alcool, des produits alimentaires, etc. Quant aux informations émises par le ou lesdits composants, elles peuvent par exemple servir à signaler le vol dudit article ou dudit emballage, ou à identifier ledit article en relation avec des détecteurs ou récepteurs dont sont pourvues les grandes surfaces.

Dans un magasin où la vente est en libre-service, il est essentiel de disposer de systèmes de protection efficaces contre le vol. C'est pourquoi divers systèmes de protection ont été mis sur le marché pour des produits coûteux, comme des spiritueux, des vêtements, etc. Il s'agit par exemple de systèmes magnétiques, de systèmes fonctionnant par radiofréquences, ou encore de systèmes constitués de composants électroniques.

Les systèmes de protection consistant en des composants détectables par des capteurs magnétiques, qui sont insérés dans l'article ou l'emballage à protéger, sont très répandus à ce jour. Il en est de même pour les systèmes fonctionnant par radiofréquences. Dans ces deux cas, le passage d'un article ou d'un emballage devant un détecteur situé en sortie de la caisse d'un magasin est mis en évidence par ledit détecteur, si le système de protection dudit article ou dudit emballage n'a pas été mis hors service par la personne préposée à la caisse du magasin.

Un inconvénient de ces systèmes est qu'ils n'offrent pas toujours toutes les garanties requises pour faire échouer les tentatives de vol. En effet, lesdits composants sont facilement accessibles au consommateur, et la personne souhaitant ne pas être repérée lors de son passage devant le détecteur a la possibilité d'altérer le système de protection constitué par les composants, le rendant ainsi inopérant.

Un autre inconvénient de ces systèmes réside dans le fait qu'ils sont installés manuellement, d'où leur prix de revient élevé.

Le but de la présente invention est de proposer un article ou un emballage qui sont au moins en partie constitués d'une matière plastique, et qui comportent chacun sur l'une au moins des faces de leur paroi en matière plastique une étiquette et au moins un composant prévu pour pouvoir émettre une ou plusieurs informations, ledit article ou ledit emballage étant d'une structure telle que lesdits composants ne puissent pas être mis hors service par le consommateur.

A cet effet, l'article ou l'emballage selon l'invention sont tels que ledit ou lesdits composants sont situés entre ladite étiquette et ladite face de ladite paroi, ladite étiquette étant rendue intimement jointe à la partie en matière plastique dudit article ou dudit emballage par moulage sur ladite étiquette de la matière plastique destinée à constituer ladite partie de l'article ou de l'emballage.

Selon une variante de réalisation de l'invention, ledit ou lesdits composants sont situés entre ladite étiquette et l'une au moins des faces externes de ladite paroi de l'article ou de l'emballage.

Selon une autre variante de réalisation, ledit ou lesdits composants sont situés entre ladite étiquette et l'une au moins des faces internes de ladite paroi de l'article ou de l'emballage.

De préférence, ladite étiquette et ledit ou lesdits composants recouvrent le fond de ladite paroi de l'article ou de l'emballage.

Le procédé de fabrication selon l'invention dudit article ou dudit emballage est tel qu'il consiste essentiellement à fixer ledit ou chaque composant sur une feuille souple en matériau thermoplastique qui est destinée à constituer ladite étiquette, à déposer ladite feuille souple pourvue du ou des composants au fond de la cavité d'un moule à injection, ladite cavité présentant la forme de ladite partie en matière plastique de l'article ou de l'emballage, et à injecter dans ladite cavité une matière plastique compatible avec celle constituant ladite feuille, de manière que la matière injectée recouvre le ou les composants et ladite feuille.

Selon une variante de réalisation, ledit procédé consiste essentiellement à déposer au fond de la cavité d'un moule à injection une feuille souple en matériau thermoplastique destinée à constituer ladite étiquette, ladite cavité présentant la forme de ladite partie en matière plastique de l'article ou de l'emballage, à fixer ledit ou chaque composant sur ladite feuille souple et à injecter dans ladite cavité une matière plastique compatible avec celle constituant ladite feuille, de manière que la matière injectée recouvre le ou les composants et ladite feuille.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en coupe d'un emballage selon un premier mode de réalisation de l'invention, et
la Fig. 2 est une vue en coupe d'un emballage selon un second mode de réalisation de l'invention.

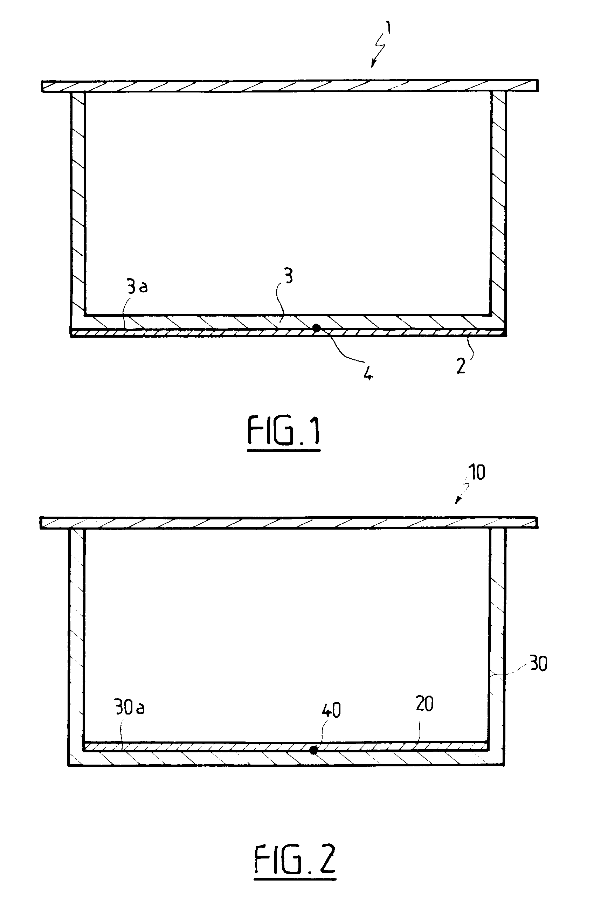

On a représenté aux Figs. 1 et 2 des emballages 1, 10 selon l'invention dont au moins une partie, telle qu'un couvercle, un bouchon, un lien quelconque, une poignée par exemple, est constituée d'une matière plastique. Cependant, l'invention ne se limite pas auxdits emballages 1, 10, et elle concerne également des articles non emballés dont au moins une partie, telle que le manche d'un outil par exemple, est constituée d'une matière plastique. Par conséquent, la description suivante des emballages 1 et 10 et de leurs procédés d'obtention respectifs s'applique également auxdits articles non emballés.

Comme on peut le voir à la Fig. 1, l'emballage 1 correspondant à un premier mode de réalisation de l'invention comporte une étiquette 2 en contact intime avec l'une au moins des faces externes 3a de sa paroi 3, et au moins un composant 4 prévu pour pouvoir émettre une ou plusieurs informations, le ou lesdits composants 4 étant situés entre ladite ou chaque face externe 3a de la paroi 3 et ladite étiquette 2.

Dans cet exemple de réalisation, l'étiquette 2 recouvre la face externe 3a de la paroi de fond 3 dudit emballage 1, laquelle paroi de fond 3 est constituée de matière plastique.

Le ou lesdits composants 4 peuvent être notamment constitués de composants électroniques, magnétiques, ou encore de composants détectables par radiofréquences. Ils peuvent par exemple être prévus pour signaler le vol de l'emballage 1 ou dudit article non emballé, lors du passage de ce dernier devant un dispositif détecteur approprié. Ils pourraient également être prévus pour émettre des informations à destination de tout dispositif récepteur approprié, ou simplement en direction du consommateur, par exemple pour identifier le produit contenu dans ledit emballage ou ledit article non emballé, etc.

Selon l'invention, l'emballage 1 et l'étiquette 2 qui lui est intimement jointe sont obtenus par un procédé de moulage par injection sur étiquette (dit en terminologie anglaise In-Mould Labelling). La mise en oeuvre de ce prodédé comprend les étapes suivantes.

On place d'abord le ou les composants 4 sur une feuille souple en matériau thermoplastique, qui est destinée à devenir l'étiquette 2, puis on les fixe au besoin sur ladite feuille 2 par des moyens adhésifs ou par la technique de pelliculage, par exemple. Puis on dépose la feuille souple 2 pourvue du ou des composants 4 au fond de la cavité d'un moule à injection, ladite cavité présentant la forme de ladite partie en matière plastique de l'emballage 1. Le ou les composants 4 et ladite feuille 2 sur laquelle ils reposent étant préalablement maintenus sur une surface du moule (au moyen d'un système électrostatique ou par aspiration, par exemple), on injecte dans celle-ci une matière plastique compatible avec celle constituant la feuille 2, de manière que la matière injectée recouvre le ou les composants 4 et ladite feuille 2. Après refroidissement, on obtient l'emballage 1 et l'étiquette 2 qui lui est intimement jointe.

Il convient de noter que la feuille souple 2 pourrait être d'abord déposée isolément au fond de la cavité du moule, le ou les composants 4 étant ensuite placés et au besoin collés sur ladite feuille 2.

L'emballage 10 correspondant au second mode de réalisation de l'invention (voir Fig. 2) comporte une étiquette 20 en contact intime avec l'une au moins des faces internes 30a de sa paroi 30, et au moins un composant 40 du même type que les composants 4 précédemment décrits, le ou les composants 40 étant situés entre ladite ou chaque face interne 30a de la paroi 30 et ladite étiquette 20.

Dans cet exemple de réalisation, l'étiquette 20 recouvre la face interne 30a de la paroi de fond 30 de l'emballage 10, laquelle paroi de fond 30 est constituée de matière plastique.

L'emballage 10 et l'étiquette 20 qui lui est intimement jointe sont obtenus par un procédé de moulage par injection sur étiquette du même type que celui précédemment décrit.

Dans ces deux modes de réalisation, il s'avère que le ou les composants 4, 40 ne sont repérables ni à la vue, ni au toucher, grâce à la jonction étroite existant entre l'étiquette 2, 20 et la paroi 3, 30 de l'emballage 1, 10 (ou de l'article non emballé), ce qui les rend inaccessibles au consommateur. De plus, l'étiquette 2, 20 ne peut pas être désolidarisée de l'emballage 1, 10 ou dudit article, du fait du procédé "In-mould Labelling" utilisé pour l'obtention dudit emballage 1.

On notera que l'emballage 1, 10 (ou l'article non emballé) comportant le ou les composants 4, 40 entre sa paroi 3, 30 et son étiquette 2, 20 pourrait également être obtenu au sein d'un moule ou d'une filière par une technique dérivée de l'injection, telle que l'injection-soufflage, le thermoformage, l'extrusion ou le rotomoulage.

L'emballage 1, 10 (ou l'article non emballé) selon l'invention présente d'autres avantages. Tout d'abord, il est d'un prix de revient réduit du fait d'une installation du ou des composants 4, 40 intervenant en une seule opération au cours du procédé de fabrication dudit emballage 1, 10 ou article, alors que les emballages ou articles classiques sont caractérisés par une installation manuelle en reprise desdits composants 4, 40.

De plus, ces derniers n'étant pas repérables, ils ne peuvent pas être facilement altérés ou enlevés, ce qui contribue à préserver leur fonction émettrice d'informations.

Enfin, le procédé "In-Mould Labelling" présente l'avantage de pouvoir être un procédé monomatériau pour l'étiquette 3, 30 et la matière injectée destinée à constituer la paroi 3, 30 de l'emballage 1, 10 ou de l'article non emballé, ce qui n'est pas le cas pour des étiquettes adhésives rapportées lors d'une opération de collage.

## Revendications

1. Article ou emballage (1, 10) au moins en partie constitués d'une matière plastique et comportant chacun sur l'une au moins des faces (3a, 30a) de leur paroi (3, 30) en matière plastique une étiquette (2, 20) et au moins un composant (4, 40) prévu pour pouvoir émettre une ou plusieurs informations, caractérisés en ce que ledit ou lesdits composants (4, 40) sont situés entre ladite étiquette (2, 20) et ladite face (3a, 30a) de ladite paroi (3, 30), ladite étiquette (2, 20) étant rendue intimement jointe à la partie en matière plastique dudit article ou dudit emballage (1, 10) par moulage sur ladite étiquette (2, 20) de la matière plastique destinée à constituer ladite partie de l'article ou de l'emballage (1, 10).

2. Article ou emballage selon la revendication 1, caractérisés en ce que ledit ou lesdits composants (4) sont situés entre ladite étiquette (2) et l'une au moins des faces externes (3a) de ladite paroi (3) de l'article ou de l'emballage (1).

3. Article ou emballage selon la revendication 1, caractérisés en ce que ledit ou lesdits composants (40) sont situés entre ladite étiquette (20) et l'une au moins des faces internes (30a) de ladite paroi (30) de l'article ou de l'emballage (10).

4. Article ou emballage (1, 10) selon l'une des revendications précédentes, caractérisés en ce que ladite étiquette (2, 20) et ledit ou lesdits composants (4, 40) recouvrent le fond de ladite paroi (3, 30) de l'article ou de l'emballage (1, 10).

5. Procédé de fabrication d'un article ou d'un emballage (1, 10) selon l'une des revendications précédentes, caractérisé en ce qu'il consiste essentiellement à fixer ledit ou chaque composant (4, 40) sur une feuille souple en matériau thermoplastique qui est destinée à constituer ladite étiquette (2, 20), à déposer ladite feuille souple (2, 20) pourvue du ou des composants (4, 40) au fond de la cavité d'un moule à injection, ladite cavité présentant la forme de ladite partie en matière plastique de l'article ou de l'emballage (1, 10), et à injecter dans ladite cavité une matière plastique compatible avec celle constituant ladite feuille (2, 20), de manière que la matière injectée recouvre le ou les composants (4, 40) et ladite feuille (2, 20).

6. Procédé de fabrication d'un article ou d'un emballage (1, 10) selon l'une des revendications 1 à 4, caractérisé en ce qu'il consiste essentiellement à déposer au fond de la cavité d'un moule à injection une feuille souple en matériau thermoplastique destinée à constituer ladite étiquette (2, 20), ladite cavité présentant la forme de ladite partie en matière plastique de l'article ou de l'emballage (1, 10), à fixer ledit ou chaque composant (4, 40) sur ladite feuille souple (2, 20) et à injecter dans ladite cavité une matière plastique compatible avec celle constituant ladite feuille (2, 20), de manière que la matière injectée recouvre le ou les composants (4, 40) et ladite feuille (2, 20).
